# FASCICULE DE BREVET EUROPEEN

(11) **EP 1 473 904 B1**
(45) Date de publication et mention de la délivrance du brevet: **31.05.2006**
(21) Numéro de dépôt: 04290503.4
(22) Date de dépôt: 25.02.2004
(51) Int. Cl.: H04L 29/06

(54) **Procédé et système d'accès à un réseau poste à poste**
Verfahren und System um auf peer to peer Netzen zuzugreifen
Method and system for accessing peer to peer networks

(30) Priorité: 30.04.2003 FR 0305378
(43) Date de publication de la demande: 03.11.2004
(73) Titulaire: FRANCE TELECOM, 75015 Paris (FR)
(72) Inventeur: Boulay, Jean-Christophe, 14790 Verson (FR); Magliulo, Philipe, 14000 Caen (FR); Petit, Stéphane, 14200 Herouville Saint Clair (FR)
(74) Mandataire: de Roquemaurel, Bruno

(56) Documents cités:
- US-A1- 2003 009 587
- HOROZOV T ET AL: "MOBY - a mobile peer-to-peer service and data network" PROCEEDINGS OF THE INTERNATIONAL CONFERENCE ON PARALLEL PROCESSING, 18 août 2002 (2002-08-18), pages 437-444, XP010609112

## Description

La présente invention concerne la mise en réseau de terminaux sur la base d'une architecture, dite "poste à poste" (peer-to-peer), et plus particulièrement un procédé et un système d'accès à des réseaux poste à poste.

Elle s'applique notamment, mais non exclusivement au téléchargement de fichiers ou ensembles de fichiers mis à disposition par les utilisateurs de tels réseaux.

Les architectures de réseau poste à poste permettent à deux terminaux reliés à un réseau de transmission, tel que le réseau Internet, de communiquer directement l'un avec l'autre, sans passer par un serveur central qui redistribue les données. Dans cette architecture, chaque terminal est configuré de manière à jouer le rôle à la fois de serveur et de client. De cette manière, chaque terminal peut partager ses informations avec un nombre illimité d'autres terminaux, sans avoir recours à un serveur central. Cette architecture offre donc des fonctionnalités d'échange de fichiers.

Certains réseaux poste à poste dits centralisés sont mis en oeuvre par un serveur gérant une base de données mémorisant pour chaque utilisateur du réseau un identifiant de l'utilisateur, associé à une liste de fichiers mis à la disposition des autres utilisateurs du réseau. Il existe également des réseaux poste à poste décentralisés dans laquelle la base de données mémorisant les informations relatives aux utilisateurs du réseau est répartie sur certains terminaux d'utilisateurs qui acceptent d'assurer cette fonction de base de données.

Actuellement, il existe plusieurs réseaux poste à poste indépendants les uns des autres comme OpenNap, Gnutella, Kazaa, et eDonkey. Chacun de ces réseaux est mis en oeuvre dans le réseau Internet par l'installation sur chaque terminal d'un logiciel d'accès spécifique du réseau poste à poste. Il en résulte qu'un utilisateur ne peut pas accéder à un tel réseau à l'aide de n'importe quel terminal. En particulier, un tel accès est difficilement envisageable avec un téléphone mobile possédant une capacité de mémoire limitée et un système d'exploitation qui est incompatible avec le logiciel d'accès.

En outre, du fait de leur énorme succès, les réseaux poste à poste tendent à être saturés, si bien que lorsqu'un utilisateur d'un tel réseau émet une requête pour télécharger un fichier donné, il est fréquent que sa requête soit insérée dans une longue file d'attente. L'utilisateur doit alors rester connecté au réseau pendant souvent plusieurs heures avant que sa requête soit finalement traitée.

La demande de brevet US 2003/0009587 «Method and apparatus for peer-to-peer services » décrit un réseau poste à poste faisant intervenir un serveur conçu pour gérer des listes de fichiers à télécharger, en association avec leurs positions respectives sur les postes clients. Lorsqu'un premier poste client, connecté à un réseau poste à poste, s'adresse au serveur pour demander un fichier particulier, le serveur dirige le premier poste client vers un second poste client possédant le fichier demandé, sélectionné en fonction de sa proximité avec le premier poste client, si possible connecté au même réseau local que le premier poste client.

Cependant, le serveur décrit dans cette demande de brevet n'est pas conçu pour recevoir des requêtes de recherche d'informations et des requêtes de téléchargement, provenant de terminaux non connectés, directement ou indirectement, à un réseau poste à poste, pour pouvoir échanger des informations par téléchargement avec les autres terminaux du réseau poste à poste. Ainsi, le terminal qui émet une requête de recherche de fichier, puis de téléchargement, doit être connecté au réseau poste à poste, et n'est donc pas configuré à la fois comme un client et comme un serveur du réseau poste à poste. De plus, un logiciel d'accès spécifique du réseau poste à poste doit être installé et exécuté sur chaque terminal.

De tels téléchargements ne peuvent donc pas être effectués à partir d'un téléphone mobile qui d'une part, ne dispose pas d'une connexion permanente à un réseau (non facturée au temps de connexion), et d'autre part, possède des capacités de mémoire insuffisantes pour recevoir le fichier téléchargé.

La présente invention a pour but de supprimer ces inconvénients. Cet objectif est atteint par la prévision d'un procédé d'accès à un réseau poste à poste reliant des terminaux d'utilisateur connectés à un réseau de transmission de données, chaque terminal étant configuré à la fois comme client et comme serveur pour partager des informations avec les autres terminaux du réseau poste à poste, le réseau poste à poste comprenant un serveur connecté au réseau de transmission de données et gérant une base de données mémorisant des informations relatives aux terminaux d'utilisateur du réseau poste à poste et aux informations partagées par ceux-ci.

Selon l'invention, ce procédé comprend :
- une phase de recherche d'informations partagées déclenchée sur le serveur à la suite d'une requête émise par un terminal d'utilisateur relié au serveur **sans exécuter un logiciel d'accès spécifique** au réseau poste à poste, cette phase comportant une étape de recherche dans la base de données d'informations partagées correspondant à la requête, une étape de transmission du serveur au terminal d'une liste d'informations partagées en réponse à la requête et une étape de sélection sur le terminal d'informations partagées en vue de leur téléchargement, et
- une phase de téléchargement d'informations partagées à la suite de l'émission par le terminal d'utilisateur **n'exécutant pas un logiciel d'accès spécifique au réseau poste à poste** d'une requête de téléchargement des informations sélectionnées.

Selon une particularité de l'invention, le téléchargement d'informations partagées est effectué directement entre le terminal relié au réseau poste à poste et dans lequel se trouve les informations partagées à télécharger et le terminal d'utilisateur non relié au réseau poste à poste.

Avantageusement, le téléchargement d'informations partagées peut être également effectué sur requête de téléchargement différé, dans un premier temps, entre le terminal relié au réseau poste à poste et dans lequel se trouve les informations partagées à télécharger, et le serveur, et dans un deuxième temps, d'une manière différée, entre le serveur et le terminal de l'utilisateur non relié au réseau poste à poste, ou un autre terminal dont dispose l'utilisateur.

Selon une autre particularité de l'invention, ce procédé comprend, préalablement au téléchargement des informations partagées sélectionnées, une étape de paiement des informations partagées par l'utilisateur ayant émis la requête de téléchargement, et une étape de confirmation du paiement au moment du téléchargement des informations partagées.

L'invention concerne également un système d'accès à un réseau poste à poste reliant des terminaux d'utilisateur connectés à un réseau de transmission de données, chaque terminal étant configuré à la fois comme client et comme serveur pour partager des informations avec les autres terminaux du réseau poste à poste, le réseau poste à poste comprenant un serveur connecté au réseau de transmission de données et gérant une base de données mémorisant des informations relatives aux terminaux d'utilisateur du réseau poste à poste et aux informations partagées par ceux-ci.

Selon l'invention, le serveur comprend:
- des moyens pour recevoir des requêtes de recherche d'informations partagées de terminaux d'utilisateurs reliés au serveur **sans exécuter un logiciel d'accès spécifique** au réseau poste à poste,
- **des moyens pour** traiter ces requêtes de recherche d'informations partagées reçus,
- des moyens pour fournir en réponse des listes d'informations partagées,
- le système comprenant des moyens pour télécharger des informations partagées d'un terminal d'utilisateur relié au réseau poste à poste vers un terminal d'utilisateur relié au serveur **n'exécutant pas un logiciel d'accès spécifique** au réseau poste à poste.

Selon une particularité de l'invention, ce système comprend des moyens pour télécharger des informations partagées directement du terminal relié au réseau poste à poste et où sont stockées ces informations vers le terminal d'utilisateur relié au réseau de transmission de données.

Selon une autre particularité de l'invention, le serveur comprend des moyens de stockage pour stocker temporairement des informations partagées, téléchargées d'un terminal d'utilisateur relié au réseau poste à poste à la suite d'une requête de téléchargement différé émise par un autre terminal d'utilisateur.

Selon encore une autre particularité de l'invention, les terminaux des utilisateurs susceptibles de recevoir les informations partagées dans le réseau poste à poste comprennent des terminaux mobiles connectés à un réseau de téléphonie mobile, le serveur comprenant des moyens pour être raccordé au réseau de téléphonie mobile et pour recevoir des terminaux mobiles des requêtes de recherche et de téléchargement d'informations partagées dans le réseau poste à poste.

Avantageusement, le réseau de transmission de données est le réseau Internet.

**L'invention concerne également un serveur d'accès un réseau poste à poste connecté au réseau de transmission de données et gérant une base de données mémorisant des informations relatives aux terminaux d'utilisateur du réseau poste à poste et aux informations partagées par ceux-ci, caractérisé en ce qu'il comprend :**
- des moyens pour recevoir des requêtes de recherche d'informations partagées des terminaux d'utilisateurs (10 à 13) reliés au serveur mais pas au réseau poste à poste sans éxécuter un logiciel d'accès spécifique,
- **des moyens pour traiter ces requêtes de recherche reçues,**
- **des moyens pour fournir en réponse des listes d'informations partagées**.

**Avantageusement, le serveur d'accès comprend des moyens de stockage pour stocker temporairement des informations partagées, téléchargées d'un terminal d'utilisateur relié au réseau poste à poste à la suite d'une requête de téléchargement différé émise par un autre terminal d'utilisateur.**

**De préférence, le serveur d'accès comprend des moyens pour être raccordé au réseau de téléphonie mobile et pour recevoir des terminaux mobiles des requêtes de recherche et de téléchargement d'informations partagées dans le réseau poste à poste**.

Un mode de réalisation préféré de l'invention sera décrit ci-après, à titre d'exemple non limitatif, avec référence aux dessins annexés dans lesquels :
La figure 1 représente schématiquement un système dans lequel le procédé selon l'invention est mis en oeuvre ;
Les figures 2 et 3 illustrent sous la forme d'organigrammes les différentes étapes du procédé selon l'invention ;
La figure 4 représente une variante du procédé selon l'invention illustré sur la figure 3.

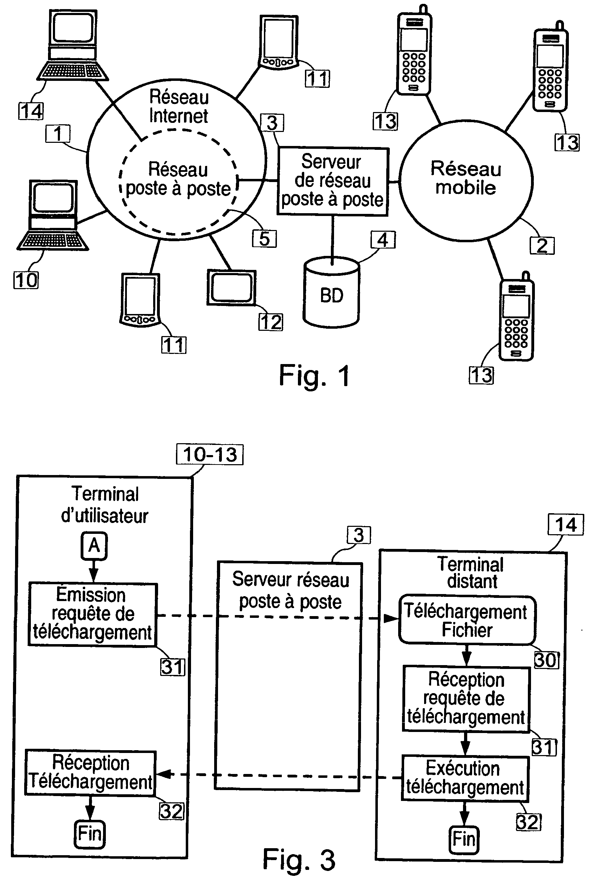

La figure 1 représente un réseau public de transmission de données 1, tel que le réseau Internet auquel sont connectés des terminaux d'utilisateurs 10, 11, 12, ainsi qu'un serveur de réseau poste à poste 3 conçu pour gérer un réseau poste à poste 5.

Les terminaux d'utilisateurs peuvent être de différents types, tels que par exemple des ordinateurs personnels 10, des assistants personnels (PDA) 11, ou encore des postes de télévision 12 munis d'une interface d'accès au réseau Internet.

Le serveur 3 peut être également raccordé à un réseau de téléphonie mobile 2, directement ou par l'intermédiaire d'une passerelle, pour permettre à des utilisateurs équipés de terminaux mobiles 13, tels que des téléphones mobiles, d'accéder au réseau Internet et au réseau poste à poste 5.

Pour mettre en oeuvre le réseau poste à poste 5, le serveur 3 gère une base de données 4 rassemblant pour chaque utilisateur, notamment un identifiant d'utilisateur vis-à-vis du réseau poste à poste 5, des informations d'accès au terminal 14 de l'utilisateur connecté au réseau 1, et une liste de fichiers stockés dans la mémoire du terminal 14, que l'utilisateur souhaite mettre à la disposition des autres utilisateurs du réseau poste à poste.

En outre, d'une manière classique, chaque terminal d'utilisateur 14 souhaitant mettre des fichiers à disposition des autres utilisateurs du réseau poste à poste 5, doit exécuter un logiciel d'accès spécifique installé dans la mémoire du terminal, ce logiciel étant conçu pour configurer et connecter au réseau le terminal de manière ce qu'il puisse fonctionner à la fois comme client et comme serveur vis-à-vis du réseau poste à poste 5.

Selon l'invention, le serveur 3 est en outre conçu pour donner accès au réseau poste à poste 5 à des terminaux 10 à 13 sans qu'il soit nécessaire d'y installer le logiciel d'accès spécifique. A cet effet, le serveur 3 est conçu de manière à fonctionner comme un serveur Web pour les utilisateurs du réseau Internet 1, et est configuré de manière à être vu comme un client par les utilisateurs du réseau 5.

L'accès ainsi offert par le serveur 3 aux utilisateurs du réseau Internet 1 qui n'ont pas un accès direct au réseau poste à poste 5, est limité au téléchargement de fichiers proposés par les utilisateurs du réseau poste à poste, sans possibilité de téléchargement de fichiers vers d'autres terminaux du réseau poste à poste. Cet accès permet également à l'utilisateur d'adhérer à des groupes d'utilisateurs ou communautés, sans donner accès aux fonctionnalités de gestion d'une telle communauté.

Pour accéder à la fonction de téléchargement de fichiers, le serveur 3 fournit aux utilisateurs non connectés directement au réseau poste à poste un accès à la base de données 4, pour leur permettre d'y effectuer des recherches sur critères, afin de recevoir en réponse des listes de fichiers dans lesquelles ils peuvent sélectionner des fichiers à télécharger.

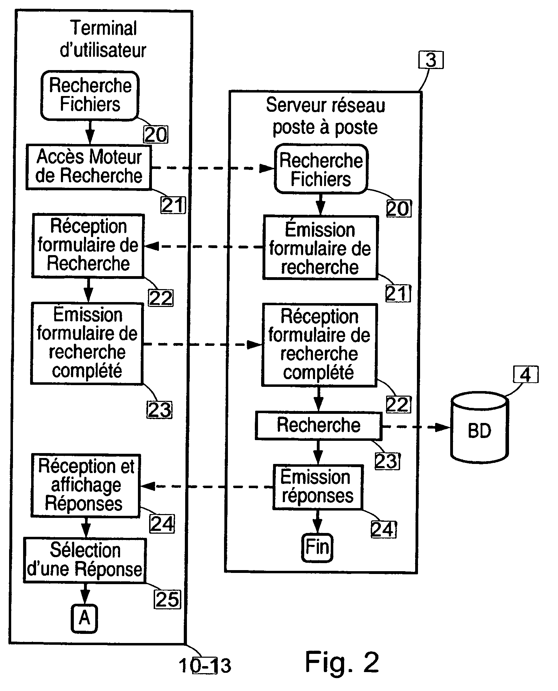

Ainsi, un utilisateur équipé d'un terminal 10 à 13, peut accéder, par l'intermédiaire du réseau Internet 1 et/ou du réseau mobile 2, au serveur 3, et exécuter une procédure de recherche 20, telle qu'illustrée sur la figure 2, à l'aide d'un logiciel de navigation Internet classique.

Sur cette figure, la procédure 20 comprenant une première étape d'accès du terminal et du logiciel de navigation, à la page d'accueil du service Web offert par le serveur 3, cette page d'accueil comportant par exemple un lien hypertexte vers un moteur de recherche que l'utilisateur peut activer (étape 21). L'activation de ce lien déclenche sur le serveur 3 une procédure 20' au cours de laquelle le serveur envoie à destination du terminal de l'utilisateur un formulaire de saisie de critères de recherche (étape 21'). Ce formulaire est reçu et affiché par le terminal de l'utilisateur à l'étape 22, puis rempli par l'utilisateur et renvoyé par le terminal au serveur 3 (étape 23). Le serveur reçoit le formulaire complété à l'étape 22' dans lequel il récupère les critères de recherche formulés par l'utilisateur, et lance la recherche dans la base de données 4 (étape 23'). A l'étape suivante 24', les réponses fournies par la base de données 4 sont envoyées par le serveur au terminal de l'utilisateur. A l'étape 24 de la procédure 20, ces réponses sont affichées par le terminal sous la forme d'une liste d'identifiants de fichiers, dans laquelle l'utilisateur peut sélectionner un ou plusieurs fichiers (étape 25) en vue de les télécharger vers la mémoire de son terminal.

Chaque identifiant de fichier dans la liste de réponses est associé à une requête de téléchargement immédiat. A cet effet, les identifiants de fichiers sont par exemple associés à des liens, par exemple des liens hypertexte, que l'utilisateur peut activer pour déclencher le téléchargement direct vers son terminal du fichier sélectionné qui est stocké dans la mémoire d'un autre terminal 14 du réseau 5.

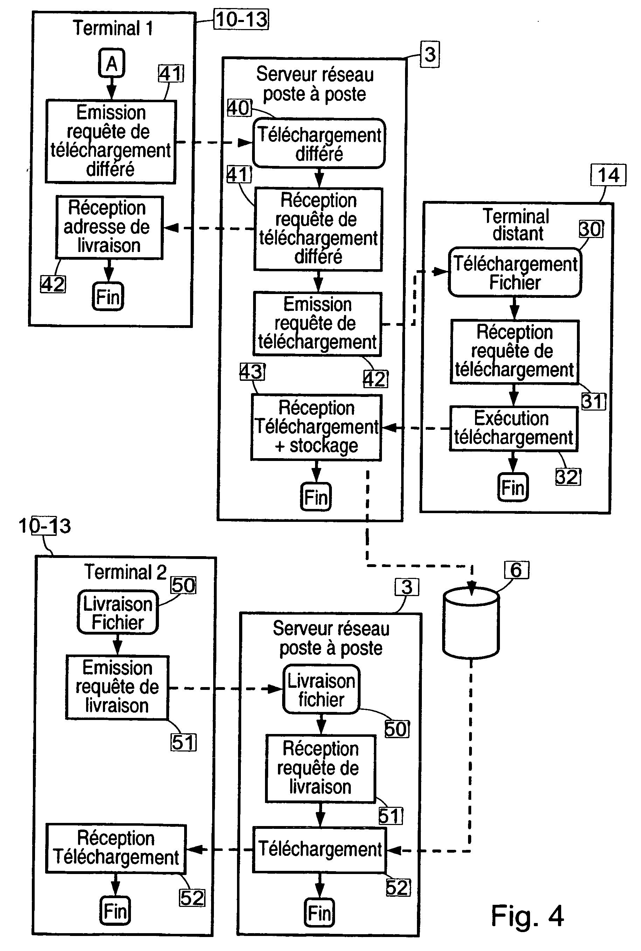

L'activation d'un lien de la liste de fichiers affichée à l'écran du terminal 10-13 de l'utilisateur déclenche l'émission par le terminal d'une requête de téléchargement (étape 31 sur la figure 3) vers le terminal 14 connecté au réseau poste à poste 5, où se trouve le fichier sélectionné. La réception d'une telle requête par le terminal 14 déclenche l'exécution d'une procédure 30' comportant une étape 31' de réception de la requête de téléchargement, suivie d'une étape 32' de téléchargement proprement dite. L'exécution de l'étape 32' déclenche une procédure 32 de téléchargement sur le terminal d'utilisateur 10-13 émetteur de la requête.

Avantageusement selon l'invention, chaque identifiant de fichier dans la liste de réponses est en outre associé à une commande de téléchargement différé. Cette disposition est prévue pour permettre à un utilisateur de commander un téléchargement de fichier à un instant donné, et d'effectuer le téléchargement proprement dit plus tard, éventuellement vers un autre terminal 10-13 que celui qui a émis la requête de téléchargement différé.

A la réception d'une telle requête de téléchargement différé, émise par un terminal d'utilisateur 10-13 (étape 41 sur la figure 4), le serveur 3 exécute une procédure 40' de téléchargement différé comportant une étape 41' de réception de la requête, suivie d'une étape d'émission d'une requête de téléchargement 42' à destination du terminal 14 où se trouve le fichier à télécharger. La réception d'une telle requête par le terminal 14 déclenche l'exécution de la procédure 30' de téléchargement décrite ci-avant, avec comme destinataire du téléchargement, non pas un terminal d'utilisateur, mais le serveur 3 qui, à l'étape suivante 43', reçoit le fichier téléchargé et le stocke temporairement dans une mémoire (cache) 6.

Pour pouvoir recevoir le fichier téléchargé par le serveur 3, l'utilisateur s'est auparavant identifié auprès du serveur, par exemple en fournissant un identifiant associé à un mot de passe, qu'il pourra utiliser afin d'obtenir le fichier téléchargé.

Alternativement, le serveur 3 peut fournir à l'utilisateur en réponse à sa requête de téléchargement différé (étape 41') une adresse URL définissant la zone de stockage temporaire du fichier téléchargé où il pourra trouver le fichier plus tard, en vue de le télécharger vers son terminal, cette adresse étant reçue par le terminal de l'utilisateur à l'étape 42.

Lorsque l'utilisateur souhaite recevoir le fichier dont il a commandé le téléchargement sur le serveur 3, il exécute la procédure 50 illustrée sur la figure 4 dans laquelle, à l'aide de son logiciel de navigation Internet, il émet à l'étape 51 une requête de livraison à destination du serveur 3. La réception de cette requête déclenche l'exécution par le serveur d'une procédure 50' au cours de laquelle le serveur reçoit la requête (étape 51') contenant l'identifiant du fichier à télécharger et déclenche le téléchargement du fichier (étape 52') vers le terminal de l'utilisateur 10, le fichier téléchargé étant reçu par celui-ci à l'étape 52.

De cette manière, l'utilisateur peut commander le téléchargement d'un fichier, par exemple à partir d'un terminal ne possédant pas de capacité mémoire suffisante pour recevoir le fichier, tel qu'un terminal mobile, et commander la livraison du fichier plus tard par exemple à partir d'un micro ordinateur personnel 10.
Un tel téléchargement différé est également avantageux lorsque la requête de l'utilisateur est placée dans une longue file d'attente du fait que de nombreux autres utilisateurs ont demandé le même fichier stocké par le même terminal.

Il est à noter qu'un téléchargement différé peut également être demandé par un utilisateur disposant d'un terminal 14 du réseau poste à poste.

Bien entendu, les téléchargements décrits ci-avant peuvent être subordonnés à un paiement à effectuer par l'utilisateur ayant demandé le téléchargement, dans le cas où le fichier demandé contient des informations payantes. En effet, certains fichiers proposés au téléchargement dans le réseau 5 peuvent contenir des oeuvres musicales ou audiovisuelles ou des logiciels. Le contenu du fichier peut être également protégé par une DRM (Digital Rights Management). Dans ce cas, le serveur 3 est également conçu pour gérer les paiements et peut être consulté par le terminal distant fournissant le fichier à télécharger pour vérifier que l'utilisateur qui a requis le téléchargement a effectivement payé le téléchargement.

Dans le cas du téléchargement différé, un paiement provisoire est effectué au moment du téléchargement du fichier par le serveur 3, ce paiement étant confirmé au moment de la livraison du fichier à l'utilisateur.

Le mode de livraison du fichier peut être adapté au canal et au terminal de livraison et au choix de l'utilisateur (montant payé). Ainsi, l'utilisateur peut commander un fichier pour le lire une seule fois. Dans ce cas, le serveur 3 traduit préalablement et/ou transmet le fichier à l'utilisateur de manière à limiter sa lecture à une seule fois, par exemple pour une lecture en transit (streaming), c'est-à-dire une lecture du fichier au fur et à mesure de son téléchargement sans que l'ensemble du fichier soit stocké dans la mémoire du terminal.

## Revendications

1. Procédé d'accès à un réseau poste à poste (5) reliant des terminaux d'utilisateur (14) connectés à un réseau de transmission de données (1), chaque terminal étant configuré à la fois comme client et comme serveur pour partager des informations avec les autres terminaux du réseau poste à poste, le réseau poste à poste comprenant un serveur (3) connecté au réseau de transmission de données et gérant une base de données (4) mémorisant des informations relatives aux terminaux (14) d'utilisateur du réseau poste à poste et aux informations partagées par ceux-ci,
**caractérisé en ce qu'**il comprend :
- une phase de recherche d'informations partagées déclenchée sur le serveur (3) à la suite d'une requête émise par un terminal d'utilisateur (10 à 13) relié au serveur (3) **sans exécuter un logiciel d'accès spécifique** au réseau poste à poste (5), cette phase comportant une étape de recherche dans la base de données (4) d'informations partagées correspondant à la requête, une étape de transmission du serveur au terminal d'une liste d'informations partagées en réponse à la requête et une étape de sélection sur le terminal d'informations partagées en vue de leur téléchargement, et
- une phase de téléchargement d'informations partagées vers le terminal (10 à 13) non relié au réseau poste à poste, à la suite de l'émission par le terminal d'utilisateur **n'exécutant pas un logiciel d'accès spécifique au réseau poste à poste** d'une requête de téléchargement des informations sélectionnées.

2. Procédé selon la revendication 1,
**caractérisé en ce que** le téléchargement d'informations partagées est effectué directement entre le terminal (14) relié au réseau poste à poste et dans lequel se trouve les informations partagées à télécharger et le terminal d'utilisateur (10 à 13) non relié au réseau poste à poste.

3. Procédé selon la revendication 1 ou 2,
**caractérisé en ce que** le téléchargement d'informations partagées est effectué sur requête de téléchargement différé, dans un premier temps, entre le terminal (14) relié au réseau poste à poste et dans lequel se trouve les informations partagées à télécharger, et le serveur (3), et dans un deuxième temps, d'une manière différée, entre le serveur (3) et le terminal de l'utilisateur (10 à 13) non relié au réseau poste à poste, ou un autre terminal (10 à 13) dont dispose l'utilisateur.

4. Procédé selon l'une des revendications 1 à 3,
**caractérisé en ce que**, préalablement au téléchargement des informations partagées sélectionnées, il comprend une étape de paiement des informations partagées par l'utilisateur ayant émis la requête de téléchargement, et une étape de confirmation du paiement au moment du téléchargement des informations partagées.

5. Système d'accès à un réseau poste à poste (5) reliant des terminaux d'utilisateur (14) connectés à un réseau de transmission de données (1), chaque terminal étant configuré à la fois comme client et comme serveur pour partager des informations avec les autres terminaux du réseau poste à poste, le réseau poste à poste comprenant un serveur (3) connecté au réseau de transmission de données et gérant une base de données (4) mémorisant des informations relatives aux terminaux (14) d'utilisateur du réseau poste à poste et aux informations partagées par ceux-ci,
**caractérisé en ce que** le serveur (3) comprend :
- des moyens pour recevoir des requêtes de recherche d'information partagées des terminaux d'utilisateurs (10 à 13) reliés au serveur (3) mais pas au réseau poste à poste (5), sans exécuter un logiciel d'accès spécifique,
- **des moyens pour** traiter ces requêtes de recherche reçues,
- des moyens pour fournir en réponse des listes d'informations partagées,
- le système comprenant des moyens pour télécharger des informations partagées d'un terminal d'utilisateur (14) relié au réseau poste à poste vers un terminal d'utilisateur (10 à 13) relié au serveur (3) mais **n'exécutant pas un logiciel d'accès spécifique** au réseau poste à poste.

6. Système selon la revendication 5,
**caractérisé en ce qu'**il comprend des moyens pour télécharger des informations partagées directement du terminal (14) relié au réseau poste à poste et où sont stockées ces informations vers le terminal d'utilisateur (10 à 13) relié au réseau de transmission de données (1).

7. Système selon la revendication 5 ou 6,
**caractérisé en ce que** le serveur (3) comprend des moyens de stockage pour stocker temporairement des informations partagées, téléchargées d'un terminal d'utilisateur (14) relié au réseau poste à poste (5) à la suite d'une requête de téléchargement différé émise par un autre terminal d'utilisateur (10 à 14).

8. Système selon l'une des revendications 5 à 7,
**caractérisé en ce que** les terminaux des utilisateurs susceptibles de recevoir les informations partagées dans le réseau poste à poste (5) comprennent des terminaux mobiles (13) connectés à un réseau de téléphonie mobile (2), le serveur (3) comprenant des moyens pour être raccordé au réseau de téléphonie mobile et pour recevoir des terminaux mobiles des requêtes de recherche et de téléchargement d'informations partagées dans le réseau poste à poste.

9. Système selon l'une des revendications 5 à 8,
**caractérisé en ce que** le réseau de transmission de données (1) est le réseau Internet.

10. **Serveur (3) d'accès à un réseau poste à poste connecté au réseau de transmission de données et gérant une base de données (4) mémorisant des informations relatives aux terminaux (14) d'utilisateur du réseau poste à poste et aux informations partagées par ceux-ci,**
**caractérisé en ce qu'il comprend :**
- **des moyens pour recevoir des requêtes de recherche d'information partagées des terminaux d'utilisateurs (10 à 13) reliés au serveur (3) mais pas au réseau poste à poste (5) sans éxécuter un logiciel d'accès spécifique,**
- **des moyens pour traiter ces requêtes de recherche reçues,**
- **des moyens pour fournir en réponse des listes d'informations partagées.**

11. **Serveur selon la revendication 10,**
**caractérisé en ce qu'il comprend des moyens de stockage pour stocker temporairement des informations partagées, téléchargées d'un terminal d'utilisateur (14) relié au réseau poste à poste (5) à la suite d'une requête de téléchargement différé émise par un autre terminal d'utilisateur (10 à 14).**

12. **Serveur selon la revendication 10 ou 11,**
**caractérisé en ce qu**'**il comprend des moyens pour être raccordé au réseau de téléphonie mobile et pour recevoir des terminaux mobiles des requêtes de recherche et de téléchargement d'informations partagées dans le réseau poste à poste.**

## Claims

1. Method for accessing a peer-to-peer network (5) connecting user terminals (14) connected to a data transmission network (1), each terminal being configured both as client and server to share information with the other terminals in the peer-to-peer network, the peer-to-peer network comprising a server (3) connected to the data transmission network and managing a database (4) memorizing information about user terminals (14) in the peer-to-peer network and information shared by said user terminals (14),
**characterized in that** said method comprises:
- a phase for searching for shared information, said phase being triggered on the server (3) following a request sent by a user terminal (10 to 13) connected to the server (3) without implementing a software for specific access to the peer-to-peer network (5), this phase comprising a step of searching in the database (4) for shared information corresponding to the request, a step in which a list of shared information is transmitted from the server to the terminal in response to the request, and a step in which shared information is selected on the terminal so as to be downloaded, and
- a phase in which shared information is downloaded, after a request for downloading the selected information has been sent via the user terminal not implementing a software for specific access to the peer-to-peer network.

2. Method according to Claim 1, **characterized in that** the shared information is downloaded directly between the terminal (14) connected to the peer-to-peer network and in which the shared information to be downloaded is located, and the user terminal (10 to 13) not connected to the peer-to-peer network.

3. Method according to Claim 1 or 2, **characterized in that** shared information is downloaded following a delayed download request, initially between the terminal (14) connected to the peer-to-peer network and in which the shared information to be downloaded is located, and the server, and in a second instance after a delay, between the server (3) and the user terminal (10 to 13) not connected to the peer-to-peer network, or another terminal (10 to 13) available to the user.

4. Method according to any of Claims 1 to 3, **characterized in that** prior to downloading the selected shared information, it comprises a step of payment for the shared information by the user who made the download request, and a step in which payment is confirmed at the time that the shared information is downloaded.

5. Peer-to-peer network access system (5) connecting user terminals (14) connected to a data transmission network (1), each terminal being configured both as client and server to share information with the other terminals in the peer-to-peer network, the peer-to-peer network comprising a server (3) connected to the data transmission network and managing a database (4) memorizing information about user terminals (14) in the peer-to-peer network and information shared by said user terminals,
**characterized in that** the server (3) comprises:
- means for receiving requests to search for shared information from user terminals (10 to 13) connected to the server (3) but not to the peer-to-peer network (5) without implementing a specific access software,
- means for processing these search requests received,
- means for supplying in response lists of shared information,
- the system comprising means for downloading shared information from a user terminal (14) connected to the peer-to-peer network to a user terminal (10 to 13) connected to the server (3) but not implementing a software for specific access to the peer-to-peer network.

6. System according to Claim 5, **characterized in that** it comprises means for downloading information shared directly from the terminal (14) connected to the peer-to-peer network and in which this information is stored, to the user terminal (10 to 13) connected to the data transmission network (1).

7. System according to Claim 5, **characterized in that** the server (3) comprises storage means for temporarily storing shared information, downloaded from a user terminal (14) connected to the peer-to-peer network (5) following a delayed download request sent by another user terminal (10 to 13).

8. System according to any of Claims 5 to 7, **characterized in that** the user terminals that are likely to receive the shared information in the peer-to-peer network (5) comprise mobile terminals (13) connected to a mobile telephone network (2), the server (3) comprising means for being connected to the mobile telephone network and for receiving requests for searches and for downloading shared information in the peer-to-peer network, from mobile terminals.

9. System according to any of Claims 5 to 8, **characterized in that** the data transmission network (1) is the Internet network.

10. Server (3) for accessing a peer-to-peer network connected to the data transmission network and managing a database (4) memorizing information about user terminals (14) in the peer-to-peer network and information shared by said user terminals,
**characterized in that** it comprises,
- means for receiving requests to search for shared information from user terminals (10 to 13) connected to the server (3) but not to the peer-to-peer network (5) without implementing a specific access software,
- means for processing these search requests received,
- means for supplying in response lists of shared information.

11. Server according to Claim 10,
**characterized in that** it comprises storage means for temporarily storing shared information, downloaded from a user terminal (14) connected to the peer-to-peer network (5) following a delayed download request sent by another user terminal (10 to 13).

12. Server according to Claim 10 or 11,
**characterized in that** it comprises means for being connected to the mobile telephone network and for receiving requests for searches and for downloading shared information in the peer-to-peer network, from mobile terminals.

## Patentansprüche

1. Verfahren zum Zugriff auf ein Peer-to-Peer-Netz (5), das an ein Datenübertragungsnetz (1) angeschlossene Benutzerterminals (14) verbindet, wobei jedes Terminal sowohl als Client als auch als Server konfiguriert ist, um Daten mit den anderen Terminals des Peer-to-Peer-Netzes gemeinsam zu nutzen, wobei das Peer-to-Peer-Netz einen Server (3) aufweist, der an das Datenübertragungsnetz angeschlossen ist und eine Datenbasis (4) verwaltet, die Daten bezüglich der Benutzerterminals (14) des Peer-to-Peer-Netzes und der von diesen gemeinsam genutzten Daten speichert,
**dadurch gekennzeichnet, dass** es aufweist:
- eine Phase der Suche nach gemeinsam genutzten Daten, die im Server (3) nach einer von einem mit dem Server (3) verbundenen Benutzerterminal (10 bis 13) ohne Ausführung einer spezifischen Zugriffssoftware zum Peer-to-Peer-Netz (5) gesendeten Abfrage ausgelöst wird, wobei diese Phase einen Schritt der Suche nach der Abfrage entsprechenden, gemeinsam genutzten Daten in der Datenbasis (4), einen Schritt der Übertragung einer Liste von gemeinsam genutzten Daten vom Server an das Terminal als Antwort auf die Abfrage, und einen Schritt der Auswahl von gemeinsam genutzten Daten im Terminal zum Zweck ihres Herunterladens aufweist, und
- eine Phase des Herunterladens von gemeinsam genutzten Daten nach dem Senden einer Abfrage zum Herunterladen der ausgewählten Daten durch das Benutzerterminal, das keine spezifische Zugriffssoftware zum Peer-to-Peer-Netz ausführt.

2. Verfahren nach Anspruch 1, **dadurch gekennzeichnet, dass** das Herunterladen von gemeinsam genutzten Daten direkt zwischen dem mit dem Peer-to-Peer-Netz verbundenen Terminal (14), in dem sich die herunterzuladenden, gemeinsam genutzten Daten befinden, und dem nicht mit dem Peer-to-Peer-Netz verbundenen Benutzerterminal (10 bis 13) erfolgt.

3. Verfahren nach Anspruch 1 oder 2, **dadurch gekennzeichnet, dass** das Herunterladen von gemeinsam genutzten Daten nach einer Abfrage des zeitlich versetzten Herunterladens zunächst zwischen dem mit dem Peer-to-Peer-Netz verbundenen Terminal (14), in dem sich die herunterzuladenden gemeinsam genutzten Daten befinden, und dem Server (3), und dann zeitlich versetzt zwischen dem Server (3) und dem nicht mit dem Peer-to-Peer-Netz verbundenen Benutzerterminal (10 bis 13) oder einem anderen Terminal (10 bis 13) erfolgt, über das der Benutzer verfügt.

4. Verfahren nach einem der Ansprüche 1 bis 3, **dadurch gekennzeichnet, dass** es vor dem Herunterladen der ausgewählten gemeinsam genutzten Daten einen Schritt der Zahlung der gemeinsam genutzten Daten durch den Benutzer, der die Abfrage zum Herunterladen gesendet hat, und einen Schritt der Bestätigung der Zahlung zum Zeitpunkt des Herunterladens der gemeinsam genutzten Daten enthält.

5. Zugriffssystem zu einem Peer-to-Peer-Netz (5), das an ein Datenübertragungsnetz (1) angeschlossene Benutzerterminals (14) verbindet, wobei jedes Terminal sowohl als Client als auch als Server konfiguriert ist, um Daten mit den anderen Terminals des Peer-to-Peer-Netz gemeinsam zu nutzen, wobei das Peer-to-Peer-Netz einen Server (3) aufweist, der an das Datenübertragungsnetz angeschlossen ist und eine Datenbasis (4) verwaltet, die Daten bezüglich der Benutzerterminals (14) des Peer-to-Peer-Netzes und der von diesen gemeinsam genutzten Daten speichert,
**dadurch gekennzeichnet, dass** der Server (3) aufweist:
- Mittel zum Empfang von Suchabfragen gemeinsam genutzter Daten von den Benutzerterminals (10 bis 13), die mit dem Server (3), aber nicht mit dem Peer-to-Peer-Netz (5) verbunden sind, ohne Ausführung einer spezifischen Zugriffssoftware,
- Mittel zur Verarbeitung dieser empfangenen Suchabfragen,
- Mittel, um als Antwort Listen von gemeinsam genutzten Daten zu liefern,
- wobei das System Mittel aufweist, um gemeinsam genutzte Daten von einem mit dem Peer-to-Peer-Netz verbundenen Benutzerterminal (14) zu einem Benutzerterminal (10 bis 13) herunterzuladen, das mit dem Server (3) verbunden ist, aber keine spezifische Zugriffssoftware zum Peer-to-Peer-Netz ausführt.

6. System nach Anspruch 5, **dadurch gekennzeichnet, dass** es Mittel aufweist, um gemeinsam genutzte Daten direkt vom mit dem Peer-to-Peer-Netz verbundenen Terminal (14), in dem diese Daten gespeichert sind, zum mit dem Datenübertragungsnetz (1) verbundenen Benutzerterminal (10 bis 13) herunterzuladen.

7. System nach Anspruch 5 oder 6, **dadurch gekennzeichnet, dass** der Server (3) Speichermittel aufweist, um vorübergehend gemeinsam genutzte Daten zu speichern, die von einem mit dem Peer-to-Peer-Netz (5) verbundenen Benutzerterminal (14) nach einer von einem anderen Benutzerterminal (10 bis 13) gesendeten Abfrage des zeitlich versetzten Herunterladens heruntergeladen werden.

8. System nach einem der Ansprüche 5 bis 7, **dadurch gekennzeichnet, dass** die Terminals der Benutzer, die die gemeinsam genutzten Daten im Peer-to-Peer-Netz (5) empfangen können, mobile Terminals (13) aufweisen, die an ein Mobiltelefonnetz (2) angeschlossen sind, wobei der Server (3) Mittel aufweist, um an das Mobilfunknetz angeschlossen zu werden und um von den mobilen Terminals Suchabfragen und Abfragen zum Herunterladen von gemeinsam genutzten Daten im Peer-to-Peer-Netz zu empfangen.

9. System nach einem der Ansprüche 5 bis 8, **dadurch gekennzeichnet, dass** das Datenübertragungsnetz (1) das Internet ist.

10. Zugriffsserver (3) zu einem Peer-to-Peer-Netz, der an das Datenübertragungsnetz angeschlossen ist und eine Datenbasis (4) verwaltet, die Daten bezüglich der Benutzerterminals (14) des Peer-to-Peer-Netzes und der von diesen gemeinsam genutzten Daten speichert, **dadurch gekennzeichnet, dass** er aufweist:
- Mittel, um Suchabfragen von gemeinsam genutzten Daten von den Benutzerterminals (10 bis 13), die mit dem Server (3), aber nicht mit dem Peer-to-Peer-Netz (5) verbunden sind, ohne Ausführung einer spezifischen Zugriffssoftware zu empfangen,
- Mittel, um diese empfangenen Suchabfragen zu verarbeiten,
- Mittel, um als Antwort Listen von gemeinsam genutzten Daten zu liefern.

11. Server nach Anspruch 10, **dadurch gekennzeichnet, dass** er Speichermittel aufweist, um vorübergehend gemeinsam genutzte Daten zu speichern, die von einem mit dem Peer-to-Peer-Netz (5) verbundenen Benutzerterminal (14) auf eine Abfrage zum zeitlich versetzten Herunterladen, die von einem anderen Benutzerterminal (10 bis 13) gesendet wird, heruntergeladen werden.

12. Server nach Anspruch 10 oder 11, **dadurch gekennzeichnet, dass** er Mittel aufweist, um an das Mobilfunknetz angeschlossen zu werden und um von den mobilen Terminals Suchabfragen und Abfragen zum Herunterladen von gemeinsam genutzten Daten im Peer-to-Peer-Netz zu empfangen.
